# EUROPÄISCHE PATENTSCHRIFT

(11) **EP 0 915 184 B1**
(45) Veröffentlichungstag und Bekanntmachung des Hinweises auf die Patenterteilung: **25.06.2003**
(21) Anmeldenummer: 97810830.6
(22) Anmeldetag: 06.11.1997
(51) Int. Cl.: C23C 24/10, C23C 26/02

(54) **Verfahren zur Herstellung einer keramischen Schicht auf einem metallischen Grundwerkstoff**
Process for producing a ceramic layer on a metallic substrate
Procédé de fabrication d'une couche de céramique sur un substrat métallique

(43) Veröffentlichungstag der Anmeldung: 12.05.1999
(73) Patentinhaber: Sulzer Markets and Technology AG, 8401 Winterthur (CH)
(72) Erfinder: Kurz, Wilfried, Prof.Dr., CH-1025 St.-Sulpice (CH); Bourban, Stèwes, CH-1994 Aproz (VS) (CH); Jansen, Franz, CH-8400 Winterthur (CH); Hofmann, Heinrich, Prof.Dr., CH-1009 Pully (CH); Mari, Daniele, CH-1024 Ecublens (CH)
(74) Vertreter: Sulzer Management AG

(56) Entgegenhaltungen:
- EP-A- 0 246 003
- EP-A- 0 497 119
- EP-A- 0 664 349
- WO-A-97/26388
- FR-A- 2 551 770
- GB-A- 2 157 600
- PATENT ABSTRACTS OF JAPAN vol. 013, no. 042 (C-564), 30.Januar 1989 & JP 63 241154 A (TOSHIBA CORP), 6.Oktober 1988,
- PATENT ABSTRACTS OF JAPAN vol. 012, no. 139 (C-491), 27.April 1988 & JP 62 253777 A (MITSUBISHI ELECTRIC CORP), 5.November 1987,
- PATENT ABSTRACTS OF JAPAN vol. 011, no. 206 (C-433), 3.Juli 1987 & JP 62 027561 A (MISHIMA KOSAN CO LTD), 5.Februar 1987,
- WEAST R.C.: 'Handbook of Chemistry and Physics', 1976, CRC PRESS, CLEVELAND, OHIO

## Beschreibung

Die Erfindung betrifft ein Verfahren zur Herstellung einer keramischen Schicht auf einem metallischen Grundwerkstoff, eine Einrichtung zum Durchführen des Verfahrens sowie nach dem Verfahren hergestellte Werkstücke. Das erfindungsgemässe Verfahren kann beispielsweise als Oberflächentechnologie bei Turbinenrädern (zum Schutz von Schaufeln oder Schaufelspitzen bei Gas- und Dampfturbinen oder Peltonrädern) oder bei Dieselmotoren (Kolben, Zylinderköpfe, Ventile) angewendet werden.

Mittels keramischer Beschichtungen können im Prinzip metallische Oberflächen bezüglich verschiedener Eigenschaften wesentlich verbessert werden, nämlich beispielsweise bezüglich des Verschleiss- und/oder Korrosionswiderstands. Die Beschichtung kann bei höheren Temperaturen auch als Wärmedämmschicht und Verschleissschutz verwendet werden. Die EP-A- 0 246 003 offenbart das Aufbringen einer keramischen Beschichtung auf einem Substrat, wobei die Beschichtung teilweise oder vollständig mittels eines Laserstrahls aufgeschmolzen wird und das Substrat bevorzugt aus Stahl, optional mit einer Ni-Schicht versehen ist. Ein keramisches Material mit einem metallischen zu paaren ist wegen grossen Unterschieden zwischen diesen Materialien sehr schwierig. Es ist Aufgabe der Erfindung, mittels eines geeigneten Verfahrens und mit einer geeigneten Auswahl der Materialien eine technisch verwendbare keramische Schicht auf einen metallischen Grundwerkstoff aufzubringen. Anspruch 1 fasst die Merkmale der erfindungsgemässen Lösung dieser Aufgabe zusammen.

Das Verfahren zur Herstellung einer keramischen Schicht auf einem metallischen Grundwerkstoff kombiniert folgende Massnahmen: Der Grundwerkstoff wird vorgeheizt. Keramisches Beschichtungsmaterial wird auf einen lokal geschmolzenen Oberflächenbereich des Grundwerkstoffs aufgebracht. Dabei wird das Beschichtungsmaterial ebenfalls aufgeschmolzen. Mit einem Zusatzmaterial, das mit_dem Beschichtungsmaterial reagiert und das auf dem Grundwerkstoff als Haftvermittlungsschicht zusätzlich aufgebracht ist oder dem Grundwerkstoff als Legierungsbestandteil beigegeben ist, wird eine metallurgische Verbindungszone erzeugt.

Dank der erfindungsgemässen Verbindungszone haftet die Schicht gut auf dem Grundwerkstoff. Es müssen solche Materialien gewählt werden, für die sich eine solche Verbindungszone oder Zwischenschicht ausbildet. Bei der Wahl der Materialien muss ferner beachtet werden, dass die keramische Schicht eine geeignete Mikrostruktur aufweist und dass zwischen Schicht und Grundwerkstoff nur kleine Restspannungen verbleiben. Insbesondere soll auch die Erzeugung einer Schicht möglich sein, die dicht, d.h. weitgehend rissfrei, und kompakt, d.h. weitgehend porenfrei, ist. Für besondere Anwendungen können auch poröse Beschichtungen von Vorteil sein. Das erfindungsgemässe Verfahren ermöglicht die Herstellung von keramischen Beschichtungen, deren Schichtdicken mindestens 0,1 mm betragen, wobei die Schichtdicken auch bedeutend grösser sein können.

Die Energie, die für das Aufschmelzen des keramischen Beschichtungsmaterials und für das aufzuschmelzende Oberflächenstück des Grundwerkstoffs erforderlich ist, wird mit Vorteil mittels eines Laserstrahls eingetragen. Keramische Stoffe sind sehr gute Absorber im Infrarotbereich, so dass ein in Pulverform vorliegendes Beschichtungsmaterial bei einem Durchflug durch den Laserstrahl vorgeheizt wird.

Der Grundwerkstoff, gegebenfalls einschliesslich der Haftvermittlungsschicht, bildet das Substrat. Auf dieses wird der Laserstrahl gerichtet. In einer Wechselwirkungszone auf dem Substrat treffen die durch den_Laserstrahl fliegenden und dabei vorgeheizten Pulverpartikel auf ein durch den Laserstrahl gebildetes Schmelzbad. Bei Vorliegen einer Haftvermittlungsschicht wird das zusätzliche Material an der Oberfläche des Substrats in der Wechselwirkungszone durch Konvektion und Diffusion teilweise in den Grundwerkstoff und teilweise in das Beschichtungsmaterial transportiert, wo es aufgrund von metallurgischen Reaktionen Übergangszonen ausbildet, die nach der anschliessenden Erstarrung des Schmelzbads den Grundwerkstoff mit der keramischen Beschichtung mechanisch stabil verbinden.

Der Grundwerkstoff ist mit Vorteil ein ferritischer Stahl mit niedrigem Kohlenstoffgehalt. Beim Abkühlen eines solchen Stahls bleibt eine Martensitbildung weitgehend aus.

Nachfolgend wird ein konkretes Beschichtungsverfahren beschrieben:

Als Beschichtungsmaterial wird ein Gemisch von Al₂O₃ und ZrO₂ verwendet, mit Vorteil in einem Verhältnis der beiden Oxide, für das sich ein Eutektikum ergibt (42 Gew% ZrO₂), so dass der Schmelzpunkt der Schicht einen minimalen Wert (rund 1900°C) annimmt.

Dem Beschichtungsmaterial können darüber hinaus weitere Zusatzstoffe wie beispielsweise Chrom-, Titan-, Yttrium-, Magnesium- und / oder Calciumoxid oder andere keramische Hartstoffe wie Carbide, Nitride, Boride zugesetzt sein, in einer Menge von maximal 10 Gewichts prozent.

Dieses Gemisch hat einen für keramische Materialien relativ grossen Wärmeausdehnungskoeffizienten, nämlich rund 8×10⁻⁶ K⁻¹. Als Grundwerkstoff wird ein Stahl verwendet, dessen Wärmeausdehnungskoeffizient verglichen mit jenem anderer Metalle relativ klein ist, nämlich ein superferritischer Stahl (X1 CrNiMo, Ausdehnungskoeffizient: 10.5×10⁻⁶ K⁻¹, Schmelzpunkt: 1485°C; Zusammensetzung in Gewichtsprozenten: 0.003 C, 28.35 Cr, 3.35 Ni, 2.37 Mo, 0.38 Si, 0.37 Mn, Rest Fe). Es ist wichtig, dass der Ausdehnungskoeffizient des superferritischen Stahls etwas grösser als jener der keramischen Schicht ist, damit nach dem Abkühlen die Beschichtung unter einer Druckspannung steht. Für die Haftvermittlungsschicht wird Titan (Ti) gewählt.

Titan als Haftvermittlungsschicht kann mittels PVD (Physical Vapour Deposition) auf den Grundwerkstoff aufgebracht werden. Das Auftragen der Beschichtung muss abgeschirmt von Sauerstoff und Stickstoff, d.h. unter Schutzgas (Ar), durchgeführt werden.

Beim Aufschmelzen des Substrats diffundiert Ti aus der Haftvermittlungsschicht in den Grundwerkstoff und in das auf die Wechselwirkungszone auftreffende Oxid. Aus dem Oxid geht Sauerstoff in die aufgeschmolzene Haftvermittlungsschicht und oxidiert dort Ti, während Zirkoniumoxid (ZrO₂) in einem Grenzbereich des keramischen Auftragsmaterials teilweise reduziert wird. Dadurch ergeben sich Angleichungen der chemischen Zusammensetzungen in einem Übergangsbereich zwischen Substrat und Beschichtung. Dieser Übergangsbereich bildet eine mechanisch stabile Verbindungszone.

In der Haftvermittlungsschicht kann das Ti teilweise oder ganz durch Zr oder Hf ersetzt sein. Als Grundwerkstoffe kommen auch andere Legierungen in Frage, die relativ kleine Wärmeausdehnungskoeffizienten haben und Schmelzpunkte aufweisen, die sich nicht stark von jenem der keramischen Schicht unterscheiden. Man kann beispielsweise einen ferritischen Baustahl verwenden. In diesem Fall muss die Haftvermittlungsschicht relativ dick sein (einige Hundertstel Millimeter), so dass eine Volumenzunahme durch martensitische Umwandlungen in einem abgeschwächten Ausmass auf die keramische Schicht einwirkt. Als Material für die Haftvermittlungsschicht ist MeCrAlY (wobei Me = Fe, Ni, Co) verwendbar, das mittels Laserbeschichtung aufgetragen werden kann. Optimal ist, wenn in der Verbindungszone die Werte für den Ausdehnungskoeffizienten und die Schmelztemperatur sich zwischen den entsprechenden Werten des Grundwerkstoffs und der keramischen Beschichtung befinden.

Für eine erfolgreiche Herstellung einer Beschichtung, die erfindungsgemäss aufgrund einer Verbindungszone auf dem Grundwerkstoff haftet, ist zusätzlich erforderlich, dass das Substrat vorgeheizt wird. Mit Vorteil wird die für das Vorheizen nötige Wärme induktiv mittels elektromagnetischer Energie eingetragen. Es wird auf eine Temperatur T_{G} vorgeheizt, wobei die absolute Temperatur T_{G} grösser als rund 50% der Schmelztemperatur Tₘ des Grundwerkstoffs ist.

Die erfindungsgemäss hergestellte Beschichtung ist auch beständig gegen Thermoschock. Ohne dass es zu einem Abplatzen der keramischen Schicht kommt, sind relativ grosse Temperaturgradienten zwischen Beschichtung und Grundwerkstoff möglich.

Nachfolgend wird die Erfindung anhand der Zeichnungen näher erläutert. Es zeigen:
- Fig. 1: eine schematische Darstellung einer ersten Einrichtung zur Herstellung der erfindungsgemässen Beschichtung,
- Fig. 2: einen Teil einer zweiten Einrichtung, nämlich eine Düse zum Zuführen eines Schutzgases, in die eine zweite Düse für eine Pulverinjektion integriert ist, und
- Fig. 3: eine zweite Ausführungsform der Schutzgasdüse.

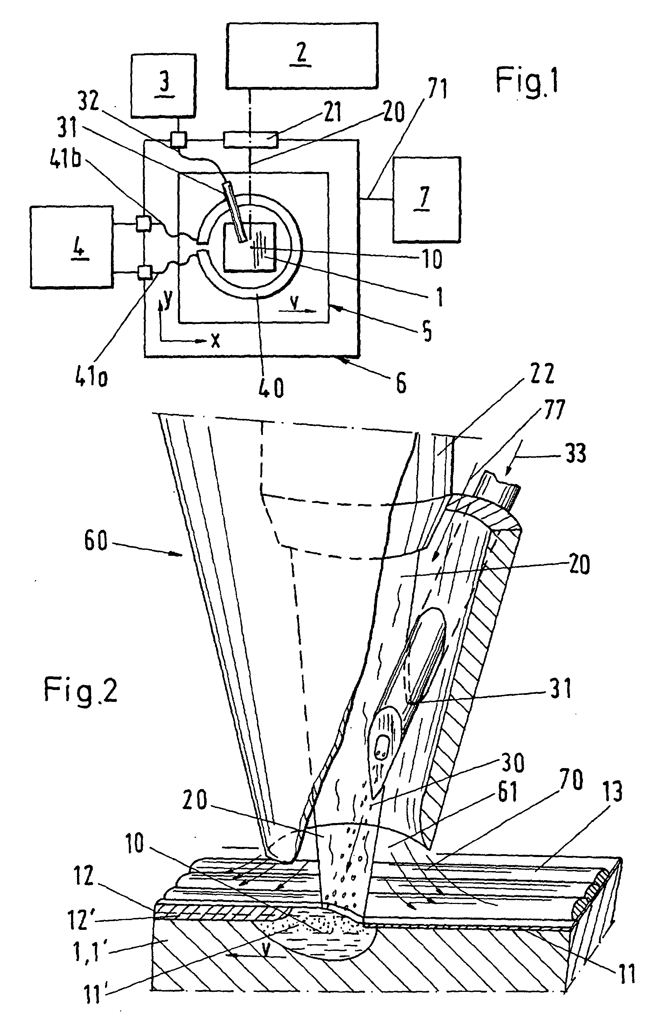

Die Einrichtung in Fig.1 umfasst folgende Komponenten: ein zu beschichtendes Werkstück 1, eine Laseranlage 2, einen Pulverspender 3 (Reservoir einschliesslich Förderer), eine Energiequelle 4 zu einer Induktionsheizung, eine Vorrichtung 5 zum Bewegen des Werkstücks 1, einen dicht verschliessenden Behälter 6 und ein Reservoir 7 für ein Schutzgas. Auf eine Wechselwirkungszone 10 auf dem Werkstück 1 wird unter der Einwirkung eines Laserstrahls 20 pulverförmiges Beschichtungsmaterial über einen Schlauch 32 und eine Düse 31 aufgetragen. Gleichzeitig wird mittels einer Elektrode 40, die über elektrische Leitungen 41a und 41b mit der Energiequelle 4 verbunden ist, induktiv Wärme im Werkstück 1 erzeugt. Mit der Einrichtung 5 wird das Werkstück 1 mit einer Vorschubgeschwindigkeit v in x-Richtung bewegt, so dass eine gleichmässige Spur 12 von aufgebrachtem Material 30 entsteht. Durch Verschiebungen des Werkstücks 1 in y-Richtung lässt sich eine Schar weiterer solcher Spuren in paralleler und dichter Anordnung herstellen. Die Elektrode 40 der Induktionsheizung kann je nach Grösse des Werkstücks 1 raumfest angeordnet sein; sie kann aber auch mit dem Werkstück 1 mitbewegt werden. Der Behälter 6, in dem die Beschichtung unter einer Schutzgasatmosphäre durchgeführt wird, ist über eine Leitung 71 mit dem Gasreservoir 7 verbunden. Ein Fenster 21 in der Wand des Behälters 6 ist für den Laserstrahl (Infrarot) durchlässig.

Es kann zusätzlich eine Regelungsvorrichtung vorgesehen sein (nicht dargestellt), mit der sich aufgrund von Temperaturmessungen am und auf dem Werkstück 1 Prozessparameter, insbesondere die Vorschubgeschwindigkeit des bewegbaren Halters 5 regeln lässt. Mit der Regelungsvorrichtung kann die Abkühlung des Grundwerkstoffs so kontrolliert werden, dass die Abkühlungsgeschwindigkeiten des Grundwerkstoffs und der Schicht von gleicher Grössenordnung sind, d.h. nicht um mehr als das Fünffache sich unterscheiden.

Es ist von Vorteil, das erfindungsgemässe Verfahren statt in der Schutzgasatmosphäre des Behälters 6 mittels einer geeignet ausgebildeten Schutzgasdüse 60 durchzuführen - siehe Fig.2: eine grosse Düse 60 für die Zufuhr des Schutzgases 77, innerhalb welcher Raum für den Laserstrahl 20 und eine kleine Düse 31 vorgesehen ist, wobei mit der kleinen Düse 31 Beschichtungsmaterial 33, das aus Pulverpartikeln 30 besteht, zugeführt wird. In einem Ringspalt zwischen der Wand der grossen Düse 60 und einem Rohrstück 22, aus dem der Laserstrahl 20 austritt, wird das Schutzgas 77 in Form einer laminaren Strömung zur Düsenöffnung 61 geführt. Nach dem Austritt aus der Düsenöffnung 61 bildet das Schutzgas 77 - weiter laminar strömend - eine Barriere 70 gegen den umgebenden Luftraum. Diese Barriere 70 ist so bemessen, dass ein Eindiffundieren der Umgebungsluft zur Wechselwirkungszone 10 unterdrückt wird. Die Einrichtungsteile, die sich im Schutzgasstrom befinden, sind geeignet geformt, so dass eine laminare Ausbildung der Strömung des Schutzgases 77 gewährleistet ist; insbesondere ist die Pulverdüse 31 stromlinienförmig ausgebildet.

Das Werkstück 1 ist mit einer Haftvermittlungsschicht 11 aus einem Material beschichtet, mit dem erfindungsgemäss eine Verbindungszone 12' erzeugbar ist. In der Schmelze der Wechselwirkungszone 10 verteilt sich dieses Material in einem durch Punkte angedeuteten Bereich 11'; es verbindet sich dabei einerseits mit dem Grundwerkstoff 1' und andererseits mit dem auftreffenden Beschichtungsmaterial 30. Durch den Materialauftrag auf das mit einer Geschwindigkeit v bewegte Werkstück 1 entsteht ein Spur 12, der zusammen mit weiteren parallel aufgebrachten Spur eine zusammenhängende Beschichtung 13 bildet.

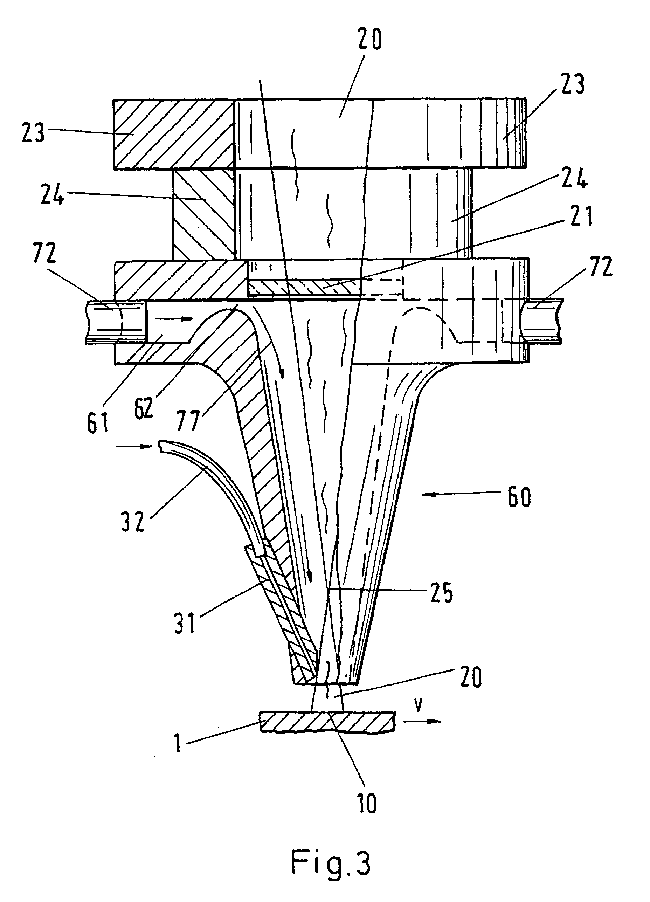

Fig.3 zeigt eine Schutzgasdüse 60 mit folgenden Komponenten: Flansch 23, Zwischenring 24, ZnSe-Fenster 21 (transparent für Infrarot), Schutzgasanschlüsse 72, Ringkanal 61, spaltförmige Durchtrittsöffnung 62 und Pulverdüse 30 mit Anschlussschlauch 31. Bei diesem Beispiel befindet sich der Brennpunkt 25 des Laserstrahls 20 über der Wechselwirkungszone 10 des Werkstücks 1. Das Schutzgas 77 wird über den Spalt 62 so in den Innenraum der Düse 60 eingespeist, dass sich eine gleichmässige laminare Strömung ausbildet.

Für die erfindungsgemässe Erzeugung einer Verbindungsschicht 12' ist es nicht erforderlich, dass das dazu benötigte Zusatzmaterial, beispielsweise Ti, in Form einer Haftvermittlungsschicht 11 aufgebracht wird (siehe Fig.2), die in einem separaten Schritt vor der Beschichtung mit dem keramischen Material 30 hergestellt werden muss. Es ist auch möglich, das Zusatzmaterial beispielsweise zusammen mit dem keramischen Material oder mittels einer zweiten Pulverdüse (nicht dargestellt) unmittelbar vor dem Auftrag des keramischen Materials 30 in die Wechselwirkungszone 10 einzubringen. Eine weitere Möglichkeit besteht darin, dass beim Giessen des Grundwerkstoffs zur Herstellung eines Gusskörpers das Zusatzmaterial zugegeben wird. Das Zusatzmaterial kann auch Bestandteil einer Zwischenschicht sein.

Dem keramischen Beschichtungsmaterial (30) können auch Partikel zugefügt werden, die chemisch weitgehend stabil gegenüber den im Beschichtungsverfahren auftretenden schmelzflüssigen Phasen sind. Dabei können die Partikel aus keramischen Hartstoffen wie Carbiden, Nitriden, Boriden und/oder Oxiden bestehen oder von beständigen Schutzschichten umhüllt sein. Solche Partikel können der Verbesserung der Verschleissbeständigkeit dienen. Die Partikel werden dem Pulver des Beschichtungsmaterial zugemischt; sie können aber auch durch eine separate Pulverzufuhr in das laserinduzierte Schmelzbad eingebracht werden.

Das erfindungsgemässe Verfahren lässt sich dazu verwenden, Schichten zum Schutz gegen thermomechanische oder chemisch-korrosive Beanspruchung herzustellen, beispielsweise zum Schutz von Turbinenrädern. Wärmedämmung bei höheren Temperaturen und Verschleissschutz sind weitere Anwendungsmöglichkeiten.

## Patentansprüche

1. Verfahren zur Herstellung einer keramischen Schicht (12, 13) auf einem metallischen Grundwerkstoff (1'), bei welchem Verfahren der Grundwerkstoff unter Schutzgas auf einer erhöhten Temperatur T_{G} gehalten wird, die rund 50% der Schmelztemperatur Tₘ des Grundwerkstoffs beträgt, keramisches Beschichtungsmaterial (30) auf einen lokal geschmolzenen Oberflächenbereich (10) des Grundwerkstoffs aufgebracht und ebenfalls aufgeschmolzen wird, so dass sich mit einem Zusatzmaterial eine metallurgische Verbindungszone (12') ausbildet, wobei das Zusatzmaterial, das auf dem Grundwerkstoff als Haftvermittlungsschicht (11) zusätzlich aufgebracht oder dem Grundwerkstoff als Legierungsbestandteil beigegeben worden ist oder während des Aufschmelzprozesses zusammen mit dem keramischen Material oder mit einer zusätzlichen Vorrichtung, vorzugsweise einer Pulverdüse, aufgebracht wird, mit dem Beschichtungsmaterial chemisch reagiert.

2. Verfahren nach Anspruch 1, **dadurch gekennzeichnet, dass** der Grundwerkstoff (1') auf eine Temperatur T_{G} vorgeheizt wird, wobei das Vorheizen vorzugsweise induktiv durch den Eintrag elektromagnetischer Energie erfolgt, und die absolute Temperatur T_{G} grösser als rund 50% der Schmelztemperatur Tₘ des Grundwerkstoffs ist.

3. Verfahren nach Anspruch 1 oder 2, **dadurch gekennzeichnet, dass** das Beschichtungsmaterial (30) und die zu beschichtende Oberfläche gleichzeitig mittels eines Laserstrahls (20) aufgeschmolzen werden, wobei der Laserstrahl auf die zu beschichtende Stelle gerichtet wird und das Beschichtungsmaterial in Pulverform durch den Strahl gefördert wird.

4. Verfahren nach einem der Ansprüche 1 bis 3, **dadurch gekennzeichnet, dass** das zur Erzeugung der Verbindungszone (12') zusätzlich auf den Grundwerkstoff (1') aufgebrachte Material (11) mittels eines separaten Verfahrensschritts, insbesondere durch eine Laserbeschichtung, durch ein Aufbringen aus der Dampfphase (PVD) oder durch thermisches Spritzen aufgebracht wird.

5. Verfahren nach einem der Ansprüche 1 bis 4, **dadurch gekennzeichnet, dass** der Materialauftrag in einem laminar strömenden Schutzgas (70) durchgeführt wird, wobei mittels der Gasströmung ein Eindiffundieren von Luft aus der Umgebung zu den zu beschichtenden Stellen (10) weitgehend unterdrückt wird.

6. Verfahren nach einem der Ansprüche 1 bis 5, **dadurch gekennzeichnet, dass** mit einer Regelungsvorrichtung die Abkühlung des Grundwerkstoffs so kontrolliert wird, dass die Abkühlgeschwindigkeiten des Grundwerkstoffs und der Schicht von gleicher Grössenordnung sind, d.h. um nicht mehr als das Fünffache sich unterscheiden.

7. Einrichtung zum Beschichten eines Werkstücks (1) mittels des Verfahrens nach einem der Ansprüche 1 bis 6, **gekennzeichnet durch** eine grosse Düse (60) für die Zufuhr des Schutzgases (77), innerhalb welcher Raum für den Laserstrahl (20) und eine kleine Düse (31) vorhanden ist, wobei mit der kleinen Düse Beschichtungsmaterial (30) zuführbar ist und unter der Austrittsöffnung (61) der grossen Düse ein bewegbarer Halter (5) für das Werkstück sowie eine Induktionsheizung (4, 40) angeordnet sind.

8. Einrichtung nach Anspruch 7, **dadurch gekennzeichnet, dass** Einrichtungsteile (31, 22), die sich im Schutzgasstrom (77) befinden, geeignet geformt sind, so dass eine laminare Ausbildung der Strömung (70) des Schutzgases gewährleistet ist.

9. Einrichtung nach Anspruch 7 und 8, **dadurch gekennzeichnet, dass** eine Regelungsvorrichtung vorhanden ist, mit der aufgrund von Temperaturmessungen am und auf dem Werkstück (1) Prozessparameter, insbesondere eine Vorschubgeschwindigkeit des bewegbaren Halters (5), regelbar sind.

10. Werkstück (1), hergestellt nach dem Verfahren gemäss einem der Ansprüche 1 bis 6, **dadurch gekennzeichnet, dass** für den metallischen Grundwerkstoff (1') ein ferritischer Stahl, der zu einer weitgehenden Vermeidung einer Martensitbildung einen niedrigen Kohlenstoffgehalt aufweist, und für das keramische Beschichtungsmaterial (30) jeweils Stoffe gewählt sind, für welche die Wärmeausdehnungskoeffizienten sowie die Schmelztemperaturen jeweils Werte aufweisen, die sich nicht mehr als um rund 50%, vorzugsweise 20%, voneinander unterscheiden.

11. Werkstück nach Anspruch 10, **dadurch gekennzeichnet, dass** das Beschichtungsmaterial (30) ein Gemisch von Al₂O₃ und ZrO₂, insbesondere einer eutektisch erstarrenden Al₂O₃-ZrO₂-Legierung, umfasst, welche zusätzlich beispielsweise Chrom-, Titan-, Yttrium-, Magnesium- und/oder Calciumoxid enthalten kann, mit maximal 10 Gewichtsprozent des zusätzlichen Oxids.

12. Werkstück nach einem der Ansprüche 10 oder 11, **dadurch gekennzeichnet, dass** das keramische Beschichtungsmaterial (30) zusätzlich bis zu 40 Volumenprozent Partikel enthält, die chemisch weitgehend stabil gegenüber den im Beschichtungsverfahren auftretenden schmelzflüssigen Phasen sind, wobei die Partikel aus keramischen Hartstoffen wie Carbiden, Nitriden, Boriden und/oder Oxiden bestehen oder von beständigen Schutzschichten umhüllt sind.

13. Werkstück nach einem der Ansprüche 10 bis 12, **dadurch gekennzeichnet, dass** die Haftvermittlungsschicht (11) bzw. der Legierungszusatz chemisch reaktive Elemente, die oxidiert werden können, wie beispielsweise Ti, in metallischer Form enthält.

## Claims

1. Method for the manufacture of a ceramic layer (12, 13) on a metallic base material (1'), wherein the base material is held under a protective gas at an elevated temperature T_{G} amounting to around 50% of the melting temperature Tₘ of the base material, ceramic coating material (30) is applied to a locally melted surface region (10) of the base material and is likewise melted so that a metallurgical bonding zone (12') forms with an additive material, with the additive material, which is additionally applied to the base material as a bond promoting layer (11), or is added to the base material as a component of the alloy, or is applied during the melting process together with the ceramic material or using an additional device, preferably a powder nozzle, reacting with the coating material.

2. Method in accordance with claim 1, **characterised in that** the base material (1') is preheated to a temperature T_{G}, with the preheating preferably taking place inductively with electromagnetic energy being introduced inductively and the absolute temperature T_{G} being greater than about 50% of the melting temperature Tₘ of the base material.

3. Method in accordance with claim 1 or claim 2 **characterised in that** the coating material (30) and the surface to be coated are simultaneously melted by means of a laser beam (20), with the laser beam being directed toward the place to be coated and with the coating material being forwarded through the beam in powder form.

4. Method in accordance with one of the claims 1 to 3 **characterised in that** the material (11) additionally applied to the base material (1') for the production of the bonding zone (12') is applied by means of a separate method step, in particular by a laser coating, by an application from the vapour phase (PVD) or by thermal spraying.

5. Method in accordance with one of the claims 1 to 4 **characterised in that** the. application of material is performed in a laminar flow of protective gas (70), with a diffusion of air from the surroundings to the areas (10) to be coated being largely supressed by means of the gas flow.

6. Method in accordance with one of the claims 1 to 5 **characterised in that** the cooling down of the base material is controlled by means of a control apparatus in such a manner that the cooling rates of the base material and of the layer are of the same order of magnitude, i.e. do not differ by more than a factor of five.

7. Apparatus for the coating of a workpiece (1) by means of the method in accordance with one of the claims 1 to 6 **characterised by** a large nozzle (60) for the supply of the protective gas (77), within which space is provided for the laser beam (20) and for a small nozzle (31), with it being possible to supply coating material (30) using the small nozzle and with a movable holder (5) for the workpiece and an induction heater (4, 40) being arranged under the outlet aperture (61) of the large nozzle.

8. Apparatus in accordance with claim 7 **characterised in that** apparatus parts (31, 22) which are located in the flow of the protective gas (77) are suitably formed so that a laminar form of the flow (70) of the protective gas is ensured.

9. Apparatus in accordance with claim 7 and claim 8 **characterised in that** a regulation apparatus is provided, by means of which the process parameters, in particular a speed of advance of the movable holder (5), are regulatable as a result of temperature measurements at and on the workpiece (1).

10. Workpiece (1) manufactured in accordance with the method in accordance with one of the claims 1 to 6 **characterised in that** a ferritic steel is chosen for the metallic base material (1') which has a low carbon content leading to martensite formation being largely avoided and materials are respectively chosen for the ceramic coating material (30) for which the coefficients of thermal expansion and the melting temperatures each have values which do not differ from one another by more than about 50%, preferably by not more than 20%.

11. Workpiece in accordance with claim 10 **characterised in that** the coating material (30) includes a mixture of Al₂O₃ and ZrO₂, in particular a eutectically solidifying Al₂O₃-ZrO₂ alloy, which can additionally contain for example chromium oxide, titanium oxide, yttrium oxide, magnesium oxide and/or calcium oxide, with a maximum of 10 percent by weight of the additional oxides.

12. Workpiece in accordance with one of the claims 10 or 11, **characterised in that** the ceramic coating material (30) additionally contains up to 40 percent by volume of particles which are largely chemically stable with respect to the liquid melt phases arising in the coating procedure, with the particles consisting of hard ceramic materials such as carbides, nitrides, borides and/or oxides or being enveloped by durable protective layers.

13. Workpiece in accordance with one of the claims 10 to 12 **characterised in that** the bond promoting layer (11) or the additive alloy contains chemically reactive elements, for example Ti, in metallic form.

## Revendications

1. Procédé de fabrication d'une couche céramique (12, 13) sur un matériau de base métallique (1'), procédé où le matériau de base est maintenu sous gaz protecteur à une température plus élevée T_{G} qui représente environ 50% de la température de fusion Tₘ du matériau de base, un matériau de revêtement céramique (30) est appliqué sur une zone de surface (10) localement fondue du matériau de base et est également amené à fondre de façon qu'il se forme avec un matériau d'addition une zone de liaison métallurgique (12'), où le matériau d'addition qui a été appliqué additionnellement sur le matériau de base comme couche d'adhésion (11) ou qui a été ajouté au matériau de base comme composant d'alliage ou qui est appliqué pendant le processus de fusion ensemble avec le matériau céramique ou avec un dispositif additionnel, de préférence une buse de poudre, réagit chimiquement avec le matériau de revêtement.

2. Procédé selon la revendication 1, **caractérisé en ce que** le matériau de base (1') est préchauffé à une température T_{G}, où le préchauffage a lieu de préférence par induction par l'amenée d'énergie électromagnétique, et où la température absolue T_{G} est plus grande qu'environ 50% de la température de fusion Tₘ du matériau de base.

3. Procédé selon la revendication 1 ou 2, **caractérisé en ce que** le matériau de revêtement (30) et la surface à revêtir sont amenés à fondre en même temps au moyen d'un faisceau laser (20), où le faisceau laser est orienté sur l'emplacement à recouvrir, et le matériau de revêtement est convoyé sous forme de poudre à travers le faisceau.

4. Procédé selon l'une des revendications 1 à 3, **caractérisé en ce que** le matériau (11) appliqué pour la production de la zone de liaison (12') additionnellement sur le matériau de base (1') est appliqué au moyen d'une étape de procédé séparée, notamment par un revêtement à laser, par une application en phase vapeur (PVD) ou par pulvérisation thermique.

5. Procédé selon l'une des revendications 1 à 4, **caractérisé en ce que** l'application du matériau est effectuée dans un gaz protecteur (70) s'écoulant d'une manière laminaire, où au moyen de l'écoulement de gaz, une entrée par diffusion de l'air de l'environnement aux emplacements à recouvrir (10) est réprimée dans une grande mesure.

6. Procédé selon l'une des revendications 1 à 5, **caractérisé en ce qu'**avec un dispositif de réglage, le refroidissement du matériau de base est contrôlé de façon que les vitesses de refroidissement du matériau de base et de la couche soient du même ordre de grandeur, c'est-à-dire ne se différencient pas plus que du quintuple.

7. Installation de revêtement d'une pièce (1) au moyen du procédé selon l'une des revendications 1 à 6, **caractérisée par** une grande buse (60) pour l'amenée du gaz protecteur (77), à l'intérieur de laquelle il y a de l'espace pour le faisceau laser (20) et une petite buse (31), où avec la petite buse, du matériau de revêtement (30) peut être amené, et sous l'ouverture de sortie (61) de la grande buse, sont disposés un support mobile (5) pour la pièce ainsi qu'un chauffage à induction (4, 40).

8. Installation selon la revendication 7, **caractérisée en ce que** des parties d'installation (31, 22) qui se trouvent dans le flux du gaz protecteur (77) sont formées d'une manière appropriée pour qu'une réalisation laminaire de l'écoulement (70) du gaz protecteur soit assurée.

9. Installation selon les revendications 7 et 8, **caractérisée en ce qu'**un dispositif de réglage est présent au moyen duquel peuvent être réglés, sur la base de mesures de température à et sur la pièce (1), des paramètres de processus, notamment une vitesse d'avance du support mobile (5).

10. Pièce (1) fabriquée conformément au procédé selon l'une des revendications 1 à 6, **caractérisée en ce qu'**on sélectionne pour le matériau de base métallique (1') un acier ferritique qui présente, pour éviter dans une grande mesure une formation de martensite, une teneur faible en carbone et, pour le matériau de revêtement céramique (30) respectivement des matériaux pour lesquels les coefficients de dilatation thermique ainsi que les températures de fusion présentent respectivement des valeurs qui ne se distinguent pas plus qu'environ 50%, de préférence 20%, l'une de l'autre.

11. Pièce selon la revendication 10, **caractérisée en ce que** le matériau de revêtement (30) comprend un mélange de Al₂O₃ et de ZrO₂, notamment d'un alliage Al₂O₃ - ZrO₂ se solidifiant de manière eutectique qui peut contenir de plus par exemple de l'oxyde de chrome, de titane, de yttrium, de magnésium et/ou de calcium, avec au maximum 10% en poids de l'oxyde additionnel.

12. Pièce selon l'une des revendications 10 ou 11, **caractérisée en ce que** le matériau de revêtement céramique (30) contient additionnellement jusqu'à 40% en volume de particules qui sont chimiquement largement stables par rapport aux phases de fusion produites lors du procédé de revêtement, où les particules sont constituées de matériaux céramiques durs comme des carbures, nitrures, borures et/ou oxydes ou sont enveloppées par des couches de protection permanentes.

13. Pièces selon l'une des revendications 10 à 12, **caractérisé en ce que** la couche d'adhésion (11) respectivement l'additif d'alliage contient des éléments chimiquement réactifs qui peuvent être oxydés, comme par exemple du Tᵢ, sous forme métallique.
